# EUROPÄISCHE PATENTSCHRIFT

(11) **EP 0 613 757 B1**
(45) Veröffentlichungstag und Bekanntmachung des Hinweises auf die Patenterteilung: **15.04.1998**
(21) Anmeldenummer: 94100766.8
(22) Anmeldetag: 20.01.1994
(51) Int. Cl.: B25B 5/08, B23Q 16/00, B23Q 3/10

(54) **Werkstück-Spannvorrichtung**
Workpiece clamping device
Dispositif de serrage pour pièces à travailler

(30) Priorität: 20.02.1993 DE 4305260
(43) Veröffentlichungstag der Anmeldung: 07.09.1994
(73) Patentinhaber: FIRMA GERHARD HÄBERLE, D-89150 Laichingen (DE)
(72) Erfinder: Häberle, Rainer, D-89150 Laichingen (DE)
(74) Vertreter: Grosse, Rainer, Dipl.-Ing.

(56) Entgegenhaltungen:
- EP-A- 0 236 537
- EP-A- 0 275 923
- EP-A- 0 308 333
- DE-U- 8 715 602
- DE-U- 9 202 180
- FR-A- 2 112 262
- US-A- 2 372 716
- US-A- 3 122 048
- US-A- 3 608 886
- SOVIET INVENTIONS ILLUSTRATED Section PQ, Week 8303, 2. März 1983 Derwent Publications Ltd., London, GB; Class P56, AN A8857 & SU-A-908 566 (N.BURENIN) 28. Februar 1982

## Beschreibung

Die Erfindung betrifft eine Werkstück-Spannvorrichtung gemäß Patentanspruch 1.

Bekannte Werkstück-Spannvorrichtungen weisen mehrere parallel zueinander verlaufende T-Nuten auf. Zum Festspannen von Werkstücken werden in die T-Nuten Spannklemmen mit T-Nutensteinen geschoben, die, nach dem sie an dem zu spannenden Werkzeug anliegen über eine Spannschraube fixiert werden. Um das Werkstück besonders fest zu verspannen, können derartige Spannklemmen auch von mehreren Seiten an das Werkstück angesetzt werden. Die Spannklemmen weisen vorzugsweise ein Exzenter-Spannelement auf. Das Werkstück wird einseitig gegen einen Anschlag geführt und die Spannklemme beziehungsweise die Spannklemmen greifen von einer dem Anschlag gegenüberliegenden Seite des Werkstücks an.

Die DE-U-92 02 180 betrifft eine Werkstück-Spannvorrichtung mit einer Grundplatte, die T-Nuten aufweist. An der Grundplatte werden Ausrichtsegmente aufgrund der quadratischen Ausbildung ihres Nutführungsteils in um 90° versetzten Lagen jeweils drehfest an dem engeren Abschnitt der jeweiligen T-Nut gehalten. Mittels des jeweiligen Nutensteins, der im breiteren Abschnitt der zugehörigen T-Nut liegt und in der eine durch das Ausrichtsegment greifende Schraube eingeschraubt ist, ist jedes Ausrichtelement in der Nut festklemmbar, so daß alle quer und längs zur Nut wirkenden Bearbeitungskräfte abgestützt werden können.

Der Erfindung liegt die Aufgabe zugrunde, eine Werkstück-Spannvorrichtung zu schaffen, die sehr einfach handhabbar ist und eine hohe Flexibilität im Hinblick auf die Spannmöglichkeiten bietet.

Diese Aufgabe wird erfindungsgemäß durch die Merkmale des Anspruchs 1 gelöst. Das Anschlagelement weist einen Grundkörper auf, der vorzugsweise einstückig mit einem Positionierungsteil versehen ist, wobei die Peripherie des Grundkörpers als Mehrkantanordnung ausgebildet ist, deren Kanten von einer Positionierungsteil-Mittelachse unterschiedlich große Abstände aufweisen. Da ferner jeweils zwei sich gegenüberliegende Kanten einer dem Positionierungsteil zugeordneten Distanzeinrichtung jeweils einen gleichen Abstand voneinander aufweisen, zu diesen in eine T-Nut einer Grundplatte eingreifenden Kanten eine Durchgangsöffnung jedoch exzentrisch liegt, kann durch Verdrehen erreicht werden, daß das in die Durchgangsöffnung eingesteckte Positionierungsteil und damit der Grundkörper ebenfalls diesen seitlichen Versatz erfährt. Durch die Ausbildung der Peripherie des Grundkörpers als Mehrkantanordnung, deren Kanten von der Positionierungsteil-Mittelachse unterschiedlich große Abstände aufweisen, ist es sehr vorteilhaft möglich, durch Verdrehen des Anschlagselements die maßlich gewünschte Kante auszuwählen, die einer erforderlichen Klemmlänge entspricht. Aufgrund der exzentrisch liegenden Mehrkantanordnung des Distanzstücks ist eine zusätzliche Feinabstimmung der Spannweiten des Anschlagelements einstellbar.

Das Positionierungsteil kann einstückig mit dem Grundkörper verbunden sein; es ist alternativ jedoch auch möglich, dieses als separates Teil auszubilden und demzufolge in ein entsprechendes Paßloch oder eine andere Aufnahme des Grundkörpers einzustecken.

Die Erfindung wird nachfolgend anhand der zugehörigen Zeichnungen näher erläutert. Es zeigen:
- Figur 1: eine Draufsicht auf eine Werkzeugspannvorrichtung;
- Figur 2: eine Explosionsdarstellung eines nicht erfindungsgemäßen Anschlagelements,
- Figur 3: eine Schnittdarstellung eines nicht erfindungsgemäßen festgespannten Anschlagelements,
- Figur 4: eine Schnittdarstellung eines festgespannten Anschlagelements nach der Erfindung,
- Figur 5: eine Draufsicht auf das Anschlagelement,
- Figur 6: eine Seitenansicht eines Exzenterspannelements und
- Figur 7: eine Seitenansicht auf ein weiteres Anschlagelement, teilweise im Schnitt.

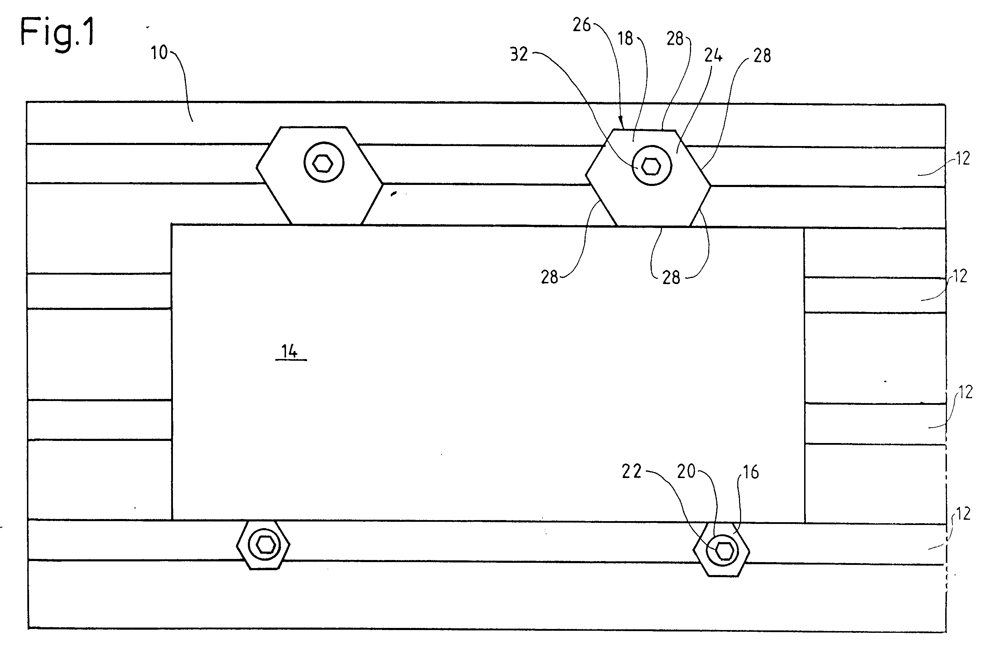

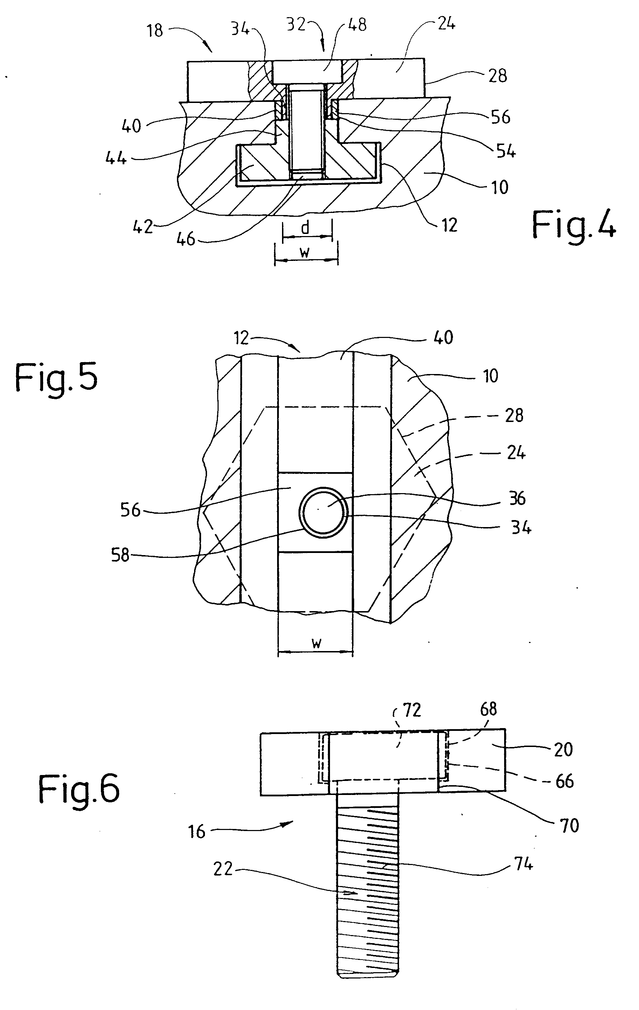

Gemäß Figur 1 weist die Werkstückspannvorrichtung eine Grundplatte 10 auf, in der parallel zueinander beabstandet T-Nuten 12 angeordnet sind. Die T-Nuten 12 verlaufen in einem bestimmten Abstand zueinander, so daß die gesamte Oberfläche der Grundplatte 10 von einem T-Nuten-System bedeckt ist. Auf der Grundplatte 10 ist ein Werkstück 14 mittels zweier Exzenter-Spannelementen 16 und zweier Anschlagelementen 18 festgespannt. Jedes Exzenter-Spannelement 16 weist einen Spannkörper 20 auf, der vorzugsweise eine sechseckförmige Peripherie besitzt. Der Spannkörper 20 wird von einer Stufenbohrung durchsetzt, in die eine Spanngewindeschraube 22 eingesteckt ist. Der Kopf der Spanngewindeschraube 22 ist exzentrisch zum Gewindeschaft ausgebildet. In der Figur 6 ist ein Exzenter-Spannelement 16 näher erläutert. Auf diese wird nachstehend noch genauer eingegangen.

Das Anschlagelement 18 besitzt einen Grundkörper 24, dessen Peripherie als Mehrkantanordnung 26 ausgebildet ist. Einzelne Kanten 28 der Mehrkantanordnung 26 weisen dabei unterschiedlich große Abstände zu einer Mittelachse eines in Figur 1 nicht dargestellten Positionierungsteiles 30 auf. Durch den Grundkörper 24 ist eine Spanngewindeschraube 32 führbar, mit der das Anschlagelement 18 an der Grundplatte 10 festgelegt werden kann. Die Einzelheiten der Festlegungsmöglichkeiten des Anschlagelements 18 werden in den nachfolgenden Figuren verdeutlicht. Vor dem Festziehen der Spanngewindeschraube 32 kann das Anschlagelement 18 so zu dem Werkstück 14 verdreht werden, daß eine geeignete Kante 28 dem Werkstück 14 zugewandt ist. Aufgrund der unterschiedlich großen Abstände der Kanten 28 zu der Mittelachse des Positionierungsteiles 30 (in Figur 1 nicht dargestellt), ist der Spannabstand zum Exzenterspannelement 16 entsprechend den Abmessungen des Werkstücks 14 wählbar. Ein Festspannen des Werkstücks 14 erfolgt durch Verdrehen der Spanngewindeschraube 22 die aufgrund ihres Exzenters den Spannkörper 20 gegen das Werkstück 14 und dieses damit gegen die Anschlagelemente 18 spannt. Da einerseits der maximal mögliche Spannweg eines Exzenter-Spannelements 16 bekannt ist (zum Beispiel 1,5 mm), muß eine dem Werkstück 14 zugeordnete Kante 28 des Anschlagelements 18 so gewählt werden, daß ein sicheres Verspannen des Werkstücks 14 gewährleistet ist. Die Abstände der Kanten 28 zu der Mittelachse des Positionierungsteiles 30 sind mit entsprechender Maß-Stufung wählbar. So kann, wenn das Werkstück 14 mit seinen äußeren Abmessungen an eine T-Nut 12 nahe heranreicht, das Anschlagelement 18 mit einer Kante 28 dem Werkstück 14 zugeordnet werden, die zum Beispiel den kleinsten Abstand zu der Mittelachse des Positionierungsteils 30 besitzt. Ist der hierfür zur Verfügung stehende Abstand zum Werkstück 14 zu gering, kann das Anschlagelement 18 in eine nächste T-Nut 12 eingesetzt werden, so daß die Kante 28, die den größten Abstand zu der Mittelachse des Positionierungsteiles 30 aufweist, dem Werkstück 14 gegenüberliegt. Die Abstände der T-Nuten 12 und der Kanten 28 von der Mittelachse des Positionierungsteiles 30 sind dabei so gewählt, daß jedes beliebige Werkstück 14 sicher festgespannt werden kann. Sowohl die Exzenterspannelemente 16 als auch die Anschlagelemente 18 können dabei längs der T-Nuten 12 verschoben werden, so daß die Festspann- und Anschlagpositionen an dem Werkstück 14 wählbar sind.

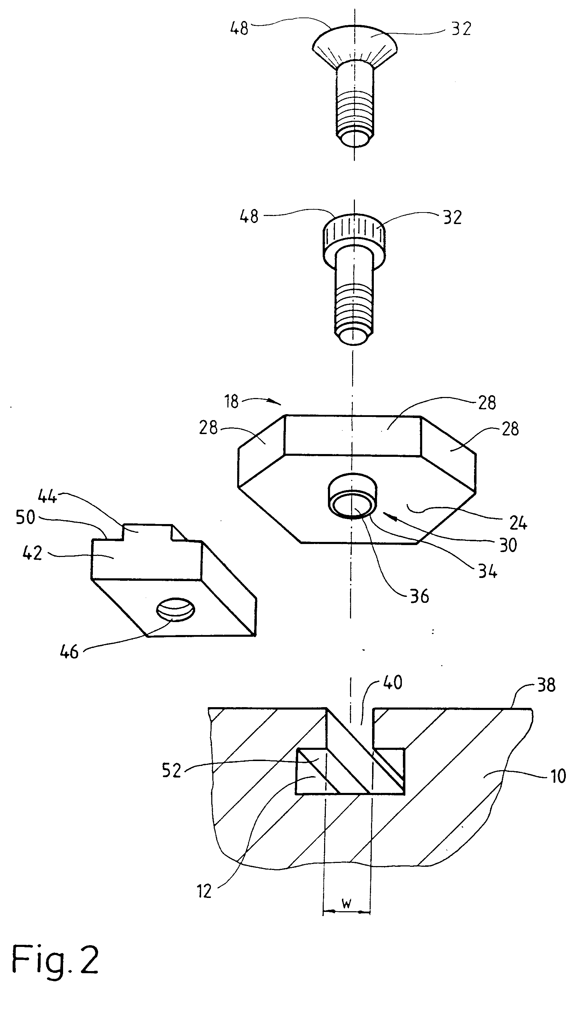

In der Figur 2 ist die Anordnung eines nicht erfindungsgemäßen Anschlagelementes 18 und dessen Positionierung in einer T-Nut 12 verdeutlicht. Man erkennt, daß das an dem Grundkörper 24 angeordnete Positionierungsteil 30 als Paßhülse 34 ausgebildet ist. Die Paßhülse 34 ist dabei einstückig mit dem Grundkörper 24 ausgebildet. Durch den Grundkörper 24 und die Paßhülse 34 führt eine Durchgangsbohrung 36. Das Anschlagelement 18 wird mit seinem Grundkörper 24 so auf eine Oberfläche 38 der Grundplatte 10 gelegt, daß die Paßhülse 34 in einen Hals 40 der T-Nut 12 eingreift. Der Außendurchmesser der Paßhülse 34 entspricht dabei der Weite w des Halses 40. Somit kann, bei Auftreten einer Spannkraft, die durch das Werkstück 14 über eine Kante 28 auf das Anschlagelement 18 übertragen wird, dieses quer zur T-Nut 12 nicht verschoben werden.

In die T-Nut 12 ist ein entsprechend dimensioniertes Klemmstück 42 einführbar. Das Klemmstück 42 weist eine Verlängerung 44 auf, die in den als Hals 40 der T-Nut 12 passend eingreift. Das Klemmstück 42 besitzt weiterhin eine Gewindebohrung 46. Bei der Montage wird das Klemmstück 42 so unter dem Anschlagelement 18 positioniert, daß die Spanngewindeschraube 32 durch die Durchgangsbohrung 36 durchgreift und in die Gewindebohrung 46 einschraubbar ist. Der Kopf 48 der Spanngewindeschraube 32 kann dabei als Zylinderkopf oder als Senkkopf ausgebildet sein. Der Grundkörper 24 besitzt eine entsprechende Ausnehmung, in die der Kopf 48 eingreift.

Durch Drehen der Spanngewindeschraube 32 mit einem entsprechenden Werkzeug, wird das Klemmstück 42 in Richtung des Anschlagelements 18 bewegt und klemmt dieses fest, wobei die Anschlagflächen 50 an der Hinterschneidung 52 der T-Nut 12 zu liegen kommen. Die erzeugbaren Spannkräfte können durch eine konische Gestaltung der zusammenwirkenden Flächen des Klemmstücks 42 und der T-Nut 12 weiter erhöht werden.

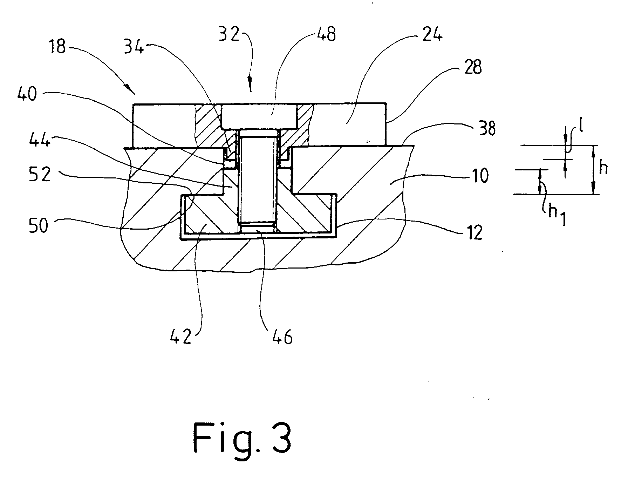

In der Figur 3 ist anhand einer Schnittdarstellung die in Figur 2 gezeigte Explosionsdarstellung verdeutlicht. Gleiche Teile sind mit gleichen Bezugszeichen versehen und hier nicht nochmals erläutert. Es wird deutlich, daß bei einer fest angezogenen Spanngewindeschraube 32 das Anschlagelement 18 fest auf die Oberfläche der Grundplatte 10 und das Klemmstück 42 fest an die Hinterschneidung 52 der T-Nut 12 gepreßt wird. Die Paßhülse besitzt eine Länge l, mit der diese den Grundkörper 24 überragt und in den Hals 40 eingreift. Der Hals 40 selber besitzt eine Höhe h. Die Verlängerung 44 des Klemmstücks 42 besitzt eine Höhe h1. Werden diese Größenverhältnisse nun so gewählt, daß h größer ist als h1 + l, so ist gewährleistet, daß sich zwischen dem Anschlagelement 18 und dem Klemmstück 44 ein genügend großes Spiel zum Festklemmen ergibt.

In der Figur 4 ist ein festgeklemmtes Anschlagelement 18 gezeigt. Gleiche Teile wie in den Figuren 2 und 3 sind wiederum mit gleichen Bezugszeichen versehen und hier nicht nochmals erläutert. Die Weite w des Halses 40 der T-Nut 12 ist größer, als der Durchmesser d der Paßhülse 34 des Anschlagelements 18. Der verbleibende Raum zwischen der Wand 54 des Halses 40 und der Paßhülse 34 ist durch ein Distanzstück 56 ausgefüllt. Das Distanzstück 56 besitzt dabei eine Durchgangsöffnung 58, die in den nachfolgenden Figuren noch verdeutlicht wird. Die Durchgangsöffnung 58 ist dabei dem Durchmesser d der Paßhülse 34 angepaßt. Insgesamt ist das Distanzstück 56 so dimensioniert, daß ein Anschlagelement 18 mit auf der Paßhülse 34 angeordnetem Distanzstück 56 spielfrei in den Hals 40 der T-Nut 12 eingeschoben werden kann. Durch die Anordnung eines solchen Distanzstückes 56 wird es möglich, daß Anschlagelement 18 bei T-Nuten 12 anzuwenden, die eine unterschiedliche Weite w ihres Halses 40 besitzen. Durch Austausch der Distanzstücke 56 kann in einfacher Weise eine Anpassung an unterschiedliche Weiten w erfolgen.

In Figur 5 ist ein erfindungsgemäß ausgebildetes Anschlagelement gezeigt, bei dem das Distanzstück 56 eine exzentrisch angeordnete Durchgangsöffnung 58 besitzt. Ist das Distanzstück 56, wie hier gezeigt, beispielsweise quadratisch ausgebildet, können durch jeweiliges Verdrehen um 90° des Distanzstückes 56, vier verschiedene Positionen der Durchgangsöffnung 58 innerhalb des Halses 40 erreicht werden. Da die Position der Durchgangsöffnung 58 gleichzeitig die Position des Anschlagelementes 18 bestimmt -wie bereits weiter oben erwähnt- können somit zu der bereits möglichen Abstandseinstellung über die Zuordnung einer Kante 28 des Grundkörpers 24 Feineinstellungen vorgenommen werden. Insbesondere kann der Abstand des Anschlagelementes 18 so eingestellt werden, daß ein mit den in Figur 1 gezeigten Exzenterspannelementen 16 realisierbarer Spannweg optimal ausgenutzt wird.

In der Figur 6 wird der Aufbau eines Exzenterspannelementes 16, wie es bereits in Figur 1 gezeigt wurde, näher erläutert. Das Exzenterspannelement 16 besitzt den Spannkörper 20, der vorzugsweise eine sechseckförmige Peripherie besitzt. Der Spannkörper 20 wird von einer Stufenbohrung 66 durchsetzt, die einen durchmessergrößeren Abschnitt 68 und einen durchmesserkleineren Abschnitt 70 aufweist. In die Stufenbohrung 66 ist die Spanngewindeschraube 22 derart eingesteckt, daß ihr Kopf 72 innerhalb des durchmessergrößeren Abschnitts 68 in der Stufenbohrung 66 geführt wird und ihr Gewindeschaft 74 aus dem durchmesserkleineren Abschnitt 70 herausragt. Der Kopf 70 ist exzentrisch zum Gewindeschaft 74 ausgebildet. Wird nun ein derartiges Exzenterspannelement 16 der Grundplatte 10 zugeordnet, in dem die Spanngewindeschraube 22 mit ihrem Gewindeschaft 74 in ein Klemmstück 42, das in eine T-Nut 12 eingeschoben ist, eingeschraubt wird, so verlagert sich dabei der Spannkörper 20 aufgrund der Führung des exzentrischen Kopfes in dem durchmessergrößeren Abschnitt 68 der Stufenbohrung 66 ebenfalls exzentrisch. Hierdurch ist es möglich, eine Stirnfläche des Spannkörpers 20 in Richtung auf das Werkstück 14 zu bewegen, so daß das Werkstück 14 gegen die Anschlagelemente 18 festgespannt werden kann.

Bei der Anordnung der Figur 5 besteht der Vorteil, daß durch die exzentrische Anordnung der Durchgangsöffnung 58 ein Versatz des Anschlagelements 18 erzielt werden kann, und zwar dann, wenn das Distanzstück 56 entsprechend in seiner Stellung variiert wird. Da andererseits aufgrund der Mehrkantanordnung des Grundkörpers 24 ebenfalls eine Variation möglich ist, ist vorzugsweise vorgesehen, daß der Stufungsabstand der Peripherie des Grundkörpers 24 mit einem entsprechenden Versatzmaß aufgrund der exzentrischen Anordnung der Durchgangsöffnung 58 zusammen wirkt. Beispielsweise ist eine 2 mm Stufung der einzelnen Kanten 28 des Grundkörpers 24 vorgesehen und durch die Exzentrizität der Durchgangsöffnung 58 ergibt sich ein 1 mm-Versatz. Die Kombination aus Beiden führt dann zu der Möglichkeit, eine 1 mm-Spannstufung vornehmen zu können.

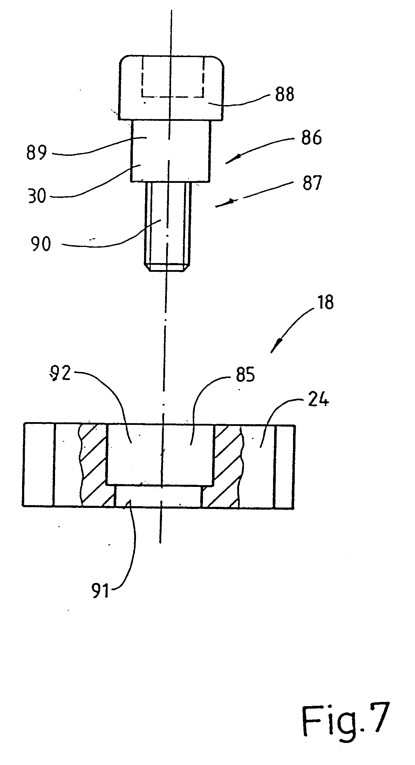

Die Figur 7 zeigt ein Ausführungsbeispiel, bei dem das Anschlagelement 18 einen Grundkörper 24 aufweist, der von einer Stufenbohrung 85 durchsetzt wird. Dem Grundkörper 24 ist ein Befestigungselement 86 zuordenbar, das als Bundschraube 87 ausgebildet ist. An den Kopf 88 der Bundschraube 87 schließt sich ein zylindrischer Abschnitt 89 an, der in den Gewindeschaft 90 übergeht. Der Durchmesser des zylindrischen Abschnitts 89 ist auf einen durchmesserkleineren Bereich 91 der Stufenbohrung 85 abgestimmt, wobei die Länge des durchmesserkleineren Bereichs 91 kleiner als die Länge des zylindrischen Abschnitts 89 ist. Die Stufenbohrung 85 weist einen durchmessergrößeren Abschnitt 92 auf, der der Aufnahme des Kopfes 88 der Bundschraube 87 dient. Im montierten Zustand, das heißt, wenn die Bundschraube 87 in die Stufenbohrung 85 eingesteckt ist, ragt der zylindrische Abschnitt 89 mit einem Abschnitt aus der Stufenbohrung 85 des Grundkörpers 24 heraus, wobei dieser herausragende Abschnitt des zylindrischen Abschnitts 89 ein Positionierteil 30 bildet.

## Patentansprüche

1. Werkstückspannvorrichtung mit einer Grundplatte und jeweils mindestens einem darauf befestigbaren Spannelement und Anschlagelement, wobei das Anschlagelement (18) einen Grundkörper (24) aufweist, dem ein mit der Grundplatte (10) in Eingriff bringbares, einen kreisförmigen Querschnitt aufweisendes Positionierungsteil (30) zugeordnet ist, wobei das Positionierungsteil (30) den Grundkörper (24) in Richtung der Grundplatte (10) überragt und in eine Durchgangsöffnung (58) eines an den gegenüberliegenden Wänden eines Halses (40) einer T-Nut (12) der Grundplatte (10) anliegenden Distanzstücks (56) passend eingreift, wobei das Distanzstück (56) eine Peripherie mit einer Mehrkantanordnung aufweist, jeweils zwei sich gegenüberliegende Kanten des Distanzstücks (56) jeweils einen gleichen Abstand aufweisen und die Durchgangsöffnung (58) exzentrisch zu den Kanten des Distanzstücks (56) angeordnet ist und wobei in der T-Nut (12) ein Klemmstück (42) geführt ist, das eine in Richtung des Halses (40) weisende Gewindebohrung (46) aufweist, in der eine durch das Positionierungsteil (30) greifende Spanngewindeschraube (32) eingeschraubt ist und wobei die Peripherie des Grundkörpers (24) als Mehrkantanordnung (26) ausgebildet ist, deren Kanten (28) von der Positionierungsteil-Mittelachse unterschiedlich große Abstände aufweisen.

2. Werkstückspannvorrichtung nach Anspruch 1, **dadurch gekennzeichnet**, daß das Positionierungsteil (30) einstückig mit dem Grundkörper (24) ausgebildet ist.

3. Werkstückspannvorrichtung nach Anspruch 1, **dadurch gekennzeichnet**, daß das Positionierungsteil (30) an der als Bundschraube (87) ausgebildeten Spanngewindeschraube angeordnet ist.

4. Werkstückspannvorrichtung nach Anspruch 3, **dadurch gekennzeichnet**, daß das Befestigungselement (86) als separates Teil ausgebildet ist, das in eine Bohrung des Grundkörpers (24) einsteckbar angeordnet ist.

## Claims

1. A workpiece-clamping device with a base plate and at least one clamping element and stop element secured thereto in each case, wherein the stop element (18) comprises a base member (24) which has associated therewith a positioning part (30) engageable with the base plate (10) and having a circular cross-section, wherein the positioning part (30) projects beyond the base member (24) in the direction towards the base plate (10) and engages in a fitted manner in a through opening (58) in a spacer member (56) resting against the opposed walls of a neck (40) of a T-shaped groove (12) in the base plate (10), wherein the spacer member (56) has a periphery with a polygonal arrangement, every two opposed edges of the spacer member (56) are at an equal distance from each other and the through opening (58) is arranged eccentrically to the edges of the spacer member (56), and wherein a clamping member (42) is guided in the T-shaped groove (12), the said clamping member (42) being provided with a threaded bore (46) which is orientated in the direction of the neck (40) and into which a threaded clamping screw (32) engaging through the positioning part (30) is screwed, and wherein the periphery of the base member (24) is constructed as a polygonal arrangement (26), the edges (28) of which are at varying distances from the median axis of the positioning part.

2. A workpiece-clamping device according to Claim 1, **characterized in that** the positioning part (30) is constructed integrally with the base member (24).

3. A workpiece-clamping device according to Claim 1, **characterized in that** the positioning part (30) is arranged on the threaded clamping screw constructed in the form of a collar screw (87).

4. A workpiece-clamping device according to Claim 3, **characterized in that** the fastening member (86) is constructed as a separate part which is arranged so as to be insertable in a bore in the base member (24).

## Revendications

1. Dispositif de serrage de pièces à travailler comprenant un plateau et chaque fois au moins un élément de serrage et un élément de blocage qui se fixent sur le plateau,
l'élément de blocage (18) se composant d'un corps de base (24) qui vient en prise avec le plateau (10) par l'intermédiaire d'une partie de positionnement (30), de section circulaire,
la partie de positionnement (30) du corps de base (24) dépassant en direction du plateau (10) et vient prendre de manière ajustée dans un passage (58) d'une pièce d'écartement (56) s'appliquant contre les parois en regard du col (40) d'une rainure à section en T, (12) du plateau (10),
la pièce d'écartement (56) ayant une périphérie polygonale, et chaque fois deux arêtes opposées de la pièce d'écartement (56) ont le même écartement, et le passage (58) est excentré par rapport aux arêtes de la pièce d'écartement (56) et
une pièce de serrage (42) est guidée dans la rainure à section en T (12), cette pièce ayant un taraudage (46) dans la direction du col (40), dans lequel se visse une vis de serrage (32) traversant la partie de positionnement (30), et la périphérie du corps de base (24) est de forme polygonale (26) et les arêtes (28) de cette forme sont à des distances différentes de l'axe géométrique de la partie de positionnement.

2. Dispositif de serrage de pièces à usiner selon la revendication 1,
caractérisé en ce que
la partie de positionnement (30) fait corps avec le corps de base (24).

3. Dispositif de serrage de pièces à usiner selon la revendication 1,
caractérisé en ce que
la partie de positionnement (30) est prévue sur la vis de serrage en forme de vis à collet (87).

4. Dispositif de serrage de pièces à usiner selon la revendication 3,
caractérisé en ce que
l'élément de fixation (86) est une pièce séparée qui est engagée dans un perçage du corps de base (24).
